# FASCICULE DE BREVET EUROPEEN

(11) **EP 2 621 867 B1**
(45) Date de publication et mention de la délivrance du brevet: **18.04.2018**
(21) Numéro de dépôt: 11773794.0
(22) Date de dépôt: 27.09.2011
(51) Int. Cl.: C02F 1/50, C02F 1/66

(54) **COMPOSITION NEUTRALISANTE ET BIOSTATIQUE POUR FLUIDES AQUEUX**
BIOSTATISCHE NEUTRALISIERUNGSZUSAMMENSETZUNG FÜR WÄSSRIGE FLUIDE
BIOSTATIC NEUTRALIZING COMPOSITION FOR AQUEOUS FLUIDS

(30) Priorité: 27.09.2010 FR 1057744
(43) Date de publication de la demande: 07.08.2013
(73) Titulaire: Arkema France, 92700 Colombes (FR)
(72) Inventeur: LALLIER, Jean-Pierre, F-69720 Saint Bonnet De Mure (FR)
(86) Numéro de dépôt international: PCT/FR2011/052252
(87) Numéro de publication internationale: WO 2012/045958

(56) Documents cités:
- WO-A1-03/011347

## Description

La présente invention concerne une composition, plus précisément une composition à base d'amines, permettant la neutralisation de fluides aqueux, tels que les dispersions aqueuses de charges minérales, les fluides lubrifiants pour coupes de métaux (« metal working fluids » en langue anglaise) et autres, tout en limitant ou empêchant le développement et la prolifération bactérienne dans lesdits fluides aqueux.

Avec le développement toujours grandissant des peintures, encres, vernis, et autres revêtements, sans solvants, ou à teneur diminuée en solvant, il est nécessaire de pouvoir disperser des charges minérales dans l'eau. La technique de dispersion dans l'eau de charges minérales est une technique aujourd'hui bien connue, mais les dispersions qui en résultent ne sont pas sans poser quelques problèmes.

En effet, dans les peintures aqueuses, telles que les peintures latex sur base acrylique, un ajustement de pH est généralement nécessaire afin de stabiliser le latex. Cet ajustement est appelé neutralisation. Par ailleurs, lorsque l'on dilue un concentré pigmentaire dans une peinture blanche ou base blanche, qu'elle soit aqueuse ou solvantée, il est également nécessaire de neutraliser ces concentrés pigmentaires.

Dans l'industrie papetière, il est également nécessaire de neutraliser les dispersions aqueuses de charges minérales destinées au couchage du papier, en raison de l'acidité des agents de dispersion utilisés, comme par exemple les agents de dispersion Coatex® P90 de la société Coatex ou Dysperbyk® 191 ou BYK® 192 de la société BYK-Chemie GmbH, ou Orotan™ 850ER de la société Rohm & Haas.

À titre d'agent de neutralisation, on utilise communément l'ammoniac, l'hydroxyde de sodium, la diméthylamine, la monoéthanolamine, la diéthanolamine, et la N-méthyléthanolamine. D'autres agents neutralisants arrivés plus récemment sur le marché sont les alkylalcanolamines, parmi lesquelles on peut citer le 2-amino-2-méthyl-1-propanol (CAS N°124-68-5), commercialisé sous la marque AMP® à 90 ou 95% dans l'eau sous les noms AMP® 90 et AMP® 95 respectivement, par la société Angus, ou encore la N-n-butyl-N-(2-hydroxyéthyl)amine, et la N-(1-méthyl-propyl)-N-(2-hydroxy-éthyl)amine, commercialisée par la société Arkema sous le nom de Alpamine™ N41.

Ces agents neutralisants, qui sont généralement des bases minérales ou organiques, communément utilisés aujourd'hui, présentent l'avantage d'être parfaitement solubles dans l'eau et permettent une neutralisation efficace des dispersions aqueuses de charges minérales.

Typiquement, le pH d'un latex est idéalement ajusté à une valeur comprise entre 8 et 10, de préférence entre 8,5 et 9,5 lorsque l'amine neutralisante (amine d'ajustement) est ajoutée dans une proportion de 0,1 à 0,5% en poids de préférence de 0,1 à 0,3%, préférentiellement encore de 0,1 à 0,2%. Dans les concentrés pigmentaires, la quantité de co-dispersant amine est, de préférence, maintenue au-dessous de 3,5% en poids.

Toutefois, ces dispersions aqueuses peuvent devenir instables, notamment en raison du développement bactérien et de la prolifération des bactéries qui peuvent survenir en leur sein. Par développement bactérien et prolifération bactérienne, on entend, au sens de la présente invention, le développement et la prolifération de bactéries, le développement et la prolifération de mycobactéries, le développement et la prolifération fongiques, et en général tout développement et prolifération d'organismes vivants, susceptibles de déstabiliser les fluides aqueux, de les colorer, de leur conférer une odeur désagréable, de les épaissir, de les rendre non homogènes, et plus généralement de les rendre impropres à leurs utilisations pour lesquels ils ont été conçus.

Aussi préconise-t-on l'ajout à ces fluides aqueux un ou plusieurs agents biostatiques (empêchant la prolifération des bactéries si elles sont apparues) et/ou agents biocides (agents « tueurs » de bactéries, empêchant ainsi l'apparition des bactéries). Les agents biostatiques et/ou biocides couramment utilisés aujourd'hui sont typiquement des biocides à base de formol, de glutaraldéhyde et/ou d'isothiazolone, par exemple ceux commercialisé par la Société Thor sous le nom Acticide®.

Ces agents biostatiques et/ou biocides sont parfaitement solubles dans les milieux aqueux et parfaitement compatibles avec les agents neutralisants exposés précédemment.

Cependant, certains de ces agents biostatiques et/ou biocides peuvent entraîner des problèmes de stabilité de pH, et certains sont maintenant considérés comme nocifs ou dangereux pour l'environnement ; les réglementations environnementales en vigueur ou à venir requièrent leur remplacement partiel ou total par des composés non nocifs et non dangereux pour l'environnement.

Dans le brevet US 4,925,582, il est indiqué que certaines amines, utilisables dans des fluides hydrauliques industriels et/ou comme agents de neutralisation, présentent des propriétés anti-bactériennes, permettant ainsi de réduire la, quantité efficace de biocides nocifs pour l'environnement.

Bien que ces amines puissent être considérées comme suffisamment compatibles avec les fluides aqueux, solubles dans les milieux aqueux, suffisamment basiques pour permettre la neutralisation des fluides aqueux lorsque nécessaire, ces amines ne présentent cependant pas une action anti-microbienne satisfaisante, voire suffisante.

Il reste donc un besoin pour des additifs pour fluides aqueux présentant à la fois une action neutralisante et une action biostatique, c'est-à-dire des agents empêchant ou limitant la prolifération (myco)bactérienne et/ou fongique.

Ainsi, un premier objectif de l'invention est de proposer de nouveaux agents neutralisants et biostatiques dans les fluides aqueux qui soient efficaces, tant sur le plan de l'ajustement du pH desdits fluides aqueux que sur le plan de l'anti-prolifération (myco)bactérienne et/ou fongique au sein desdits fluides aqueux, et qui soient en outre parfaitement compatibles avec lesdits fluides aqueux.

D'autres objectifs encore apparaîtront dans la description de l'invention qui suit.

La Demanderesse a maintenant découvert que ces objectifs peuvent être atteints en totalité ou en partie grâce aux compositions selon la présente invention.

Ainsi, la présente invention a tout d'abord pour objet une composition neutralisante et biostatique pour fluides aqueux comprenant au moins une base, organique ou minérale (B), et au moins une amine de formule (2) : 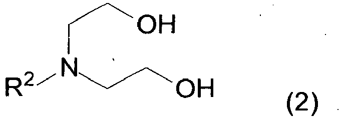 dans laquelle R² représente un radical hydrocarboné linéaire ou ramifié, de préférence un radical alkyle linéaire ou ramifié, comportant 7, 8, 9, 10, 11 ou 12 atomes de carbone.

La base (B) peut être de tout type connu en soi, et, à titre d'exemples non limitatifs, les bases minérales peuvent avantageusement être choisies parmi les hydroxydes d'alcalin ou d'alcalino-terreux, en particulier parmi l'hydroxyde de sodium, de potassium ou de calcium, et les bases azotées, de préférence les bases comprenant au moins un groupement amine, de préférence encore 1 groupement amine.

En variante, la base (B) peut être une base organique, telles que celles communément utilisés par l'homme du métier, en particulier les bases azotées, par exemple l'ammoniaque, et plus particulièrement les bases comprenant au moins un groupement amine, de préférence encore 1 groupement amine.

Selon un aspect préféré de la présente invention, la base (B) est une base organique, de manière tout à fait préférée la base (B) est une amine de faible poids moléculaire, c'est-à-dire, au sens de la présente invention, une amine comportant un nombre total d'atomes de carbone inférieur ou égal à 10, de préférence un nombre total d'atomes de carbone inférieur ou égal à 9. Pour les besoins de l'invention, les amines cycliques ne sont pas préférées.

Les amines de faible poids moléculaire sont de préférence des mono-amines et peuvent être des amines primaires, secondaires ou tertiaires. L'atome d'azote peut être substitué par 1 radical ou 2 radicaux, voire 3 radicaux hydroxyalkyle, de préférence par 1 ou 2, voire 3 radicaux hydroxyéthyle, de préférence encore 1 radical ou 2 radicaux hydroxyéthyle, plus préférentiellement encore 2 radicaux hydroxyéthyle.

Plus préférentiellement encore, la base (B) est une amine de formule (1) : 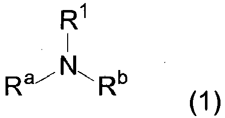 dans laquelle :
- soit R¹ représente un radical hydrocarboné linéaire ou ramifié, de préférence un radical alkyle linéaire ou ramifié, comportant 1, 2, 3, 4, 5 ou 6 atomes de carbone, et R^{a} et R^{b} représentent chacun le radical -(CH₂-CH₂)-OH, et
- soit R¹ représente l'atome d'hydrogène et R^{a} représente l'atome d'hydrogène et R^{b} représente le radical -(CH₂-CH₂)-OH.

Dans un mode de réalisation particulièrement préféré, la présente invention a pour objet une composition neutralisante et biostatique pour fluides aqueux comprenant au moins une amine comportant un nombre total d'atomes de carbone inférieur à 10, de préférence inférieur à 9, de préférence au moins une amine de formule (1) et au moins une amine de formule (2) : 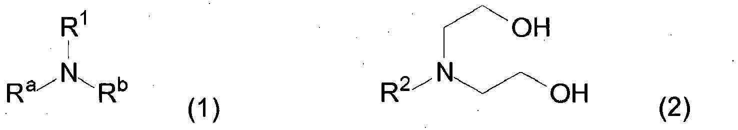 dans lesquelles R^{a}, R^{b}, R¹ et R² sont tels que définis précédemment.

Par composition neutralisante, on entend une composition apte à neutraliser un fluide aqueux acide, ou encore apte à ajuster le pH d'un fluide aqueux acide.

Par composition biostatique, on entend une composition apte à empêcher ou tout au moins à limiter la prolifération bactérienne, mycobactérienne et/ou fongique d'un fluide aqueux.

Par « fluide aqueux », on entend tout type de fluide aqueux industriels, et notamment, à titre d'exemples non limitatifs, les bases blanches de peintures aqueuses ou hydro-organiques, les concentrés pigmentaires aqueux, les dispersions aqueuses de charges minérales, les fluides lubrifiants pour coupes de métaux (« metal working fluids » en langue anglaise), les fluides d'abrasion pour polissage du verre (miroirs) et autres.

Les amines de formule (1) sont connues en elles-mêmes et sont soit disponibles dans le commerce soit préparées aisément à partir de modes opératoires connus ou facilement accessibles à l'homme du métier dans la littérature brevet, les articles scientifiques, les ouvrages scientifiques, les « Chemical Abstracts » ou encore sur Internet.

Parmi les amines de formule (1), on préfère tout particulièrement, dans le cadre de la présente invention, la butylamine, l'hexylamine, la (2-éthyl)hexylamine, la monoéthanolamine (MEA), la N-(n-butyl)-N-hydroxyéthylamine, la N-(sec-butyl)-N-hydroxyéthylamine, la méthyldiéthanolamine (MDEoA), l'éthyldiéthanolamine (EDEoA), la propyldiéthanolamine (PrDEoA), la butyldiéthanolamine (BDEoA), la pentyldiéthanolamine (PDEoA) et l'hexyldiéthanolamine (HDEoA), et de manière tout particulièrement préférée, l'amine de formule (1) est choisie parmi la monoéthanolamine (MEoA), la (2-éthyl)hexylamine et la méthyldiéthanolamine (MDEoA).

Les amines de formule (2) sont connues en elles-mêmes et sont soit disponibles dans le commerce soit préparées aisément à partir de modes opératoires connus ou facilement accessibles à l'homme du métier dans la littérature brevet, les articles scientifiques, les ouvrages scientifiques, les « Chemical Abstracts » ou encore sur Internet.

Les amines de formule (2) peuvent par exemple être avantageusement obtenues par amination réductrice d'une cétone ou d'un aldéhyde par une amine primaire ou une hydroxy-alkylamine primaire, comme décrit dans la demande internationale PCT/FR2010/051299.

Parmi les amines de formule (2), on préfère tout particulièrement, dans le cadre de la présente invention, la n-heptyldiéthanolamine (C₇DEoA), la n-octyldiéthanolamine (C₈DEoA), la 2-(éthyl)hexyldiéthanolamine (C₂₋₆DEoA), la n-décyldiéthanolamine (C₁₀DEoA), la n-undécyldiéthanolamine (C₁₁DEoA) et la n-dodécyldiéthanolamine (C₁₂DEoA). De manière tout particulièrement préférée, l'amine de formule (2) est la n-heptyldiéthanolamine (C₇DEoA).

Selon un mode de réalisation préféré de la présente invention, la composition neutralisante et biostatique comprend :
a) au moins une base, minérale ou organique, de préférence, une base organique, et de préférence encore un base aminée, choisie parmi l'hydroxyde de sodium, l'hydroxyde de potassium, l'hydroxyde de calcium, l'ammoniaque, la monoéthanolamine (MEoA), la (2-éthyl)hexylamine et la méthyldiéthanolamine (MDEoA) ; et
b) au moins une deuxième amine de formule (2), de préférence la n-heptyldiéthanolamine (C₇DEoA).

On préfère tout particulièrement les compositions comprenant la monoéthanolamine (MEoA) et la n-heptyldiéthanolamine (C₇DEoA) ou les compositions comprenant la méthyldiéthanolamine (MDEoA) et la n-heptyldiéthanolamine (C₇DEoA).

Dans les compositions selon la présente invention, le ratio molaire base (B)/amine (2), et en particulier le ratio molaire amine (1)/amine (2), est généralement compris entre 1:99 et 99:1, dé préférence entre 1:9 et 9:1. Le ratio molaire défini ici dépend généralement de la nature du fluide aqueux, de son taux d'acidité, de l'effet biostatique recherché, de la température, et autres. Ce ratio molaire pourra être optimisé facilement par l'homme du métier.

Selon un mode de réalisation tout particulièrement préféré, ce ratio molaire est avantageusement compris entre 1,5 et 3.

Dans la pratique, et notamment lorsque la base (B) est une amine de faible moléculaire, les compositions selon l'invention comprennent de 40% à 99% en poids d'au moins une amine de faible poids moléculaire et de 1% à 60% en poids d'au moins une amine (2), par rapport au poids total de la composition.

Selon encore un aspect préféré, ces pourcentages vont respectivement de 50% à 80% en poids pour l'amine de faible poids moléculaire et de 20% à 50% en poids pour l'amine (2), et de préférence encore de 60% à 80% en poids, et de 20% à 40% en poids respectivement.

Les amines de formule (2) possèdent des propriétés biostatiques tout à fait intéressantes, mais ne sont que faiblement ou non solubles dans l'eau et présentes des propriétés neutralisantes le plus souvent insuffisantes. Les bases (B), et en particulier les amines de formule (1), au contraire, sont solubles dans l'eau et présentent un pouvoir neutralisant tout à fait satisfaisant.

La Demanderesse a maintenant découvert, de manière inattendue, que l'association d'au moins une base (B), de préférence au moins une amine de formule (1), avec au moins une amine de formule (2) confère à la composition des propriétés d'un très grand intérêt, et notamment de très bonnes propriétés neutralisantes, de très bonnes propriétés biostatiques, et également une excellente solubilité dans l'eau.

Sans vouloir être lié à la théorie, la base (B), et en particulier l'amine de formule (1), joue un rôle de co-solvant dans l'eau pour l'amine de formule (2).

Ainsi, les compositions neutralisantes et biostatiques selon l'invention présentent le très grand avantage de rendre disponible auprès de l'utilisateur final une composition homogène, stable dans le temps, miscible dans l'eau, et donc ne nécessitant qu'une seule et unique addition d'une solution à un fluide aqueux afin de pouvoir à la fois ajuster son pH et limiter, voire éviter, la prolifération bactérienne en son sein.

Un autre avantage lié aux compositions neutralisantes et biostatiques selon l'invention est leur pouvoir dispersant, ou plus précisément leur pouvoir co-dispersant, lorsque lesdites compositions sont utilisées dans des dispersions aqueuses de charges minérales.

Les compositions selon la présente invention peuvent se présenter sous forme concentrée ou diluées à l'eau ou dans un solvant organique hydrosoluble ou encore dans un solvant hydro-organique, en toutes proportions, selon l'utilisation envisagée.

Les compositions selon la présente invention peuvent en outre comprendre un ou plusieurs additifs communément utilisés dans les domaines d'applications envisagés. Parmi les additifs pouvant être ajoutés aux compositions selon la présente invention, on peut citer, à titre d'exemples non limitatifs, les co-solvants, les tensio-actifs, les colorants, les stabilisants, les bases minérales ou organiques, les biocides, les stabilisants U.V., et autres.

Selon un deuxième aspect, la présente invention concerne l'utilisation, comme additif neutralisant et biostatique, d'une composition comprenant au moins une base, de préférence au moins une amine de faible poids moléculaire, de préférence encore au moins une amine de formule (1), et au moins une amine de formule (2) telle que décrite précédemment pour fluide aqueux industriel.

L'effet neutralisant et biostatique du fluide aqueux industriel est obtenu par simple introduction et mélange éventuel dans ledit fluide aqueux industriel, d'une quantité efficace d'une composition selon la présente invention.

Par quantité efficace, dans le paragraphe précédent, on entend une quantité généralement comprise entre 0,0001 et 10% en poids de composition neutralisante et biostatique par rapport au poids total du fluide aqueux industriel, de préférence entre 0,001% et 5% en poids. Toutefois, cette quantité dépend de l'application envisagée et de l'effet recherché. Ainsi, en général, cette quantité peut être comprise entre 0,001% et 1%, de préférence entre 0,003% et 0,5% en poids, par exemple environ 400 ppm en poids dans le cas de dispersions aqueuses de charges minérales ; dans le cas des solutions aqueuses pour travail des métaux, cette quantité peut être comprise entre 3% et 5% en poids.

Grâce à leurs capacités neutralisantes, biostatiques, hydrosolubles et co-dispersantes, les compositions selon la présente invention trouvent des utilisations particulièrement adaptées dans tout type de fluides industriels, tels que par exemple ceux décrits plus haut.

Selon encore un autre aspect, la présente invention concerne un fluide industriel comprenant au moins une composition neutralisante et biostatique selon la présente invention, la quantité de ladite composition dans ledit fluide industriel étant comme indiquée précédemment.

Les exemples suivants illustrent la présente invention sans toutefois en limiter la portée. Dans ces exemples, les parties et les pourcentages sont en poids, sauf indication contraire.

### Exemple 1 : Test de neutralisation

Le pouvoir neutralisant est évalué en déterminant le poids d'amine (en grammes) nécessaire pour neutraliser 100 g d'acide oléique. Dans cet exemple sont comparés les pouvoirs neutralisants des produits suivants :
- Amine (1) seule : monoéthanolamine (MEoA) ;
- Amine (2) seule : n-heptyldiéthanolamine (C₇DEoA) ;
- Mélange amine (1) + amine (2) : 70% poids MEoA + 30% poids C₇DEoA.

Les résultats sont présentés dans le tableau 1 suivant :

**--Tableau 1 --**

| | Quantité nécessaire pour neutraliser 100 g d'acide oléique (g) |
|---|---|
| MEoA | 6,8 |
| C₇DEoA | 36 |
| MEoA (70%) + C₇DEoA (30%) | 8,8 |

Malgré un pouvoir neutralisant observé beaucoup plus faible pour la C₇DEoA, on constate que le mélange MEoA (70%) + C₇DEoA (30%) conserve un très bon pouvoir neutralisant grâce à l'apport de la MEoA.

### Exemple 2 : Test de solubilité dans l'eau

Dans cet exemple, on considère les deux amines suivantes :
- Amine (1) seule : méthyldiéthanolamine (MDEoA) ;
- Amine (2) seule : n-heptyldiéthanolamine (C₇DEoA).

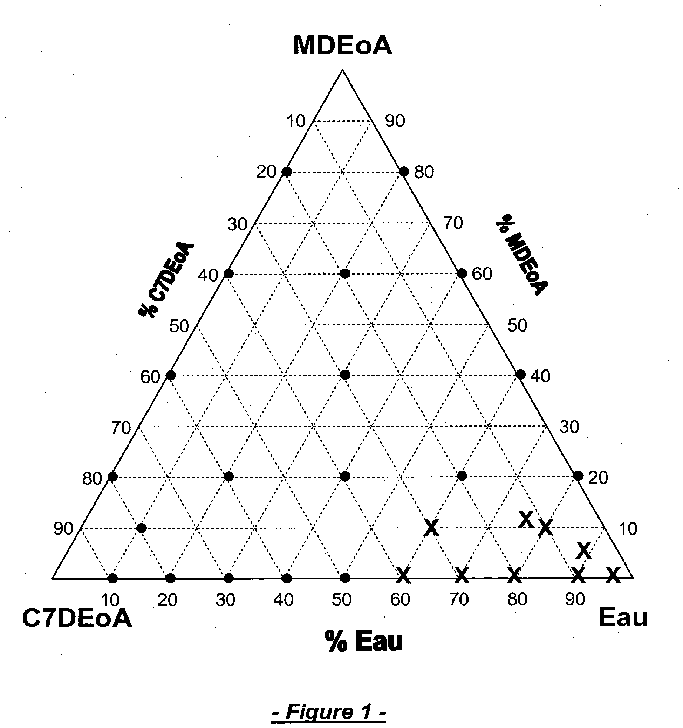

La figure 1 annexée représente un diagramme de phase ternaire entre ces 2 amines et l'eau. Les pourcentages sont exprimés en poids. Les mélanges miscibles sont notés par des points (●), les mélanges non miscibles sont notés par des croix (X).

Le binaire C₇DEoA / Eau n'est pas miscible en toutes proportions. Il y a non-miscibilité lorsque la C₇DEoA se trouve en quantité supérieure à 50%. Dans la zone de non-miscibilité (quantité de C₇DEoA supérieure à 50%), la MDEoA joue son rôle d'agent de couplage (co-solvant) lorsqu'elle est présente en une teneur supérieure à 15%.

### Exemple 3 : Test de prolifération bactérienne

On réalise un test afin d'évaluer l'activité bactéricide et/ou bactériostatique d'un échantillon de composition de l'invention, selon la norme NF EN 1040 (avril 2006).

Un échantillon d'une composition telle quelle (concentration maximale de l'essai : 80%) et/ou dilué avec de l'eau est ajouté à une suspension d'essai de bactéries (*Pseudomonas aeruginosa* et *Staphylococcus aureus*). Le mélange est maintenu à 20°C pendant 5 minutes.

Une partie aliquote est prélevée à l'issue de ce temps de contact; l'activité bactéricide et/ou bactériostatique dans ce prélèvement est immédiatement neutralisée ou supprimée selon une méthode validée. La méthode utilisée de préférence est la méthode par dilution-neutralisation. La filtration sur membrane est utilisée lorsqu'il n'est pas possible de trouver un neutralisant adapté.

On procède au dénombrement des bactéries survivantes dans chaque échantillon, ce qui permet de calculer le taux de réduction, noté de "+" (faible taux de réduction) à "++++" (fort taux de réduction), dans le Tableau 2 suivant :

**-- Tableau 2 --**

| ***Composition*** | ***Taux de réduction*** |
|---|---|
| MEoA | + |
| C₇DEoA | ++++ |
| MEoA (70%) + C₇DEoA (30%) | +++ |
| MEoA (90%) + C₇DEoA (10%) | ++ |

## Revendications

1. Composition neutralisante et biostatique pour fluides aqueux comprenant au moins une base, organique ou minérale (B), et au moins une amine de formule (2) : 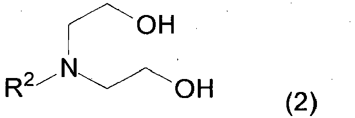 dans laquelle R² représente un radical hydrocarboné linéaire ou ramifié, de préférence un radical alkyle linéaire ou ramifié, comportant 7, 8, 9, 10, 11 ou 12 atomes de carbone.

2. Composition selon la revendication 1, dans laquelle la base (B) est choisie parmi les hydroxydes d'alcalin ou d'alcalino-terreux, les bases azotées, de préférence les bases comprenant au moins un groupement amine, de préférence encore 1 groupement amine.

3. Composition selon la revendication 1 ou la revendication 2, dans laquelle la base (B) est une base organique, de manière tout à fait préférée la base (B) est une amine comportant un nombre total d'atomes de carbone inférieur ou égal à 10, de préférence un nombre total d'atomes de carbone inférieur ou égal à 9, comportant éventuellement 1 radical ou 2 radicaux, voire 3 radicaux hydroxyalkyle, de préférence par 1 ou 2, voire 3 radicaux hydroxyéthyle, de préférence encore 1 radical ou 2 radicaux hydroxyéthyle, plus préférentiellement encore 2 radicaux hydroxyéthyle.

4. Composition selon l'une quelconque des revendications précédentes, comprenant au moins une amine comportant un nombre total d'atomes de carbone inférieur à 10, de préférence inférieur à 9, de préférence au moins une amine de formule (1) et au moins une amine de formule (2) : 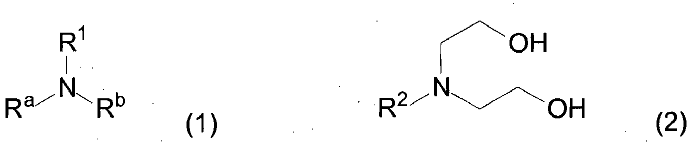 formule (1) et formule(2), dans lesquelles :
• soit R¹ représente un radical hydrocarboné linéaire ou ramifié, de préférence un radical alkyle linéaire ou ramifié, comportant 1, 2, 3, 4, 5 ou 6 atomes de carbone, et R^{a} et R^{b} représentent chacun le radical-(CH₂-CH₂)-OH,
• soit R¹ représente l'atome d'hydrogène et R^{a} représente l'atome d'hydrogène et R^{b} représentent le radical -(CH₂-CH₂)-OH,
• et, dans les deux cas ci-dessus, R² représente un radical hydrocarboné linéaire ou ramifié, de préférence un radical alkyle linéaire ou ramifié, comportant 7, 8, 9, 10, 11 ou 12 atomes de carbone.

5. Composition selon l'une quelconque des revendications précédentes, dans laquelle l'amine de formule (1) est choisie parmi la butylamine, l'hexylamine, la (2-éthyl)hexylamine, la monoéthanolamine (MEA), la méthyldiéthanolamine (MDEoA), l'éthyldiéthanolamine (EDEoA), la propyldiéthanolamine (PrDEoA), la butyldiéthanolamine (BDEoA), la pentyldiéthanolamine (PDEoA) et l'hexyldiéthanolamine (HDEoA), de manière préférée, parmi la monoéthanolamine (MEA) et la méthyldiéthanolamine (MDEoA).

6. Composition selon l'une quelconque des revendications précédentes, dans laquelle l'amine de formule (2) est choisie parmi la n-heptyldiéthanolamine (C₇DEoA), la n-octyldiéthanolamine (C₈DEoA), la 2-(éthyl)hexyldiéthanolamine (C₂₋₆DEoA), la n-décyldiéthanolamine (C₁₀DEoA), la n-undécyldiéthanolamine (C₁₁DEoA) et la n-dodécyldiéthanolamine (C₁₂DEoA), de préférence l'amine de formule (2) est la n-heptyldiéthanolamine (C₇DEoA).

7. Composition selon l'une quelconque des revendications précédentes, comprenant au moins une première amine choisie parmi la monoéthanolamine (MEA), la (2-éthyl)hexylamine et la méthyldiéthanolamine (MDEoA) et au moins une deuxième amine qui est la n-heptyldiéthanolamine (C₇DEoA).

8. Composition selon l'une quelconque des revendications précédentes, comprenant monoéthanolamine (MEA) et n-heptyldiéthanolamine (C₇DEoA) ou méthyldiéthanolamine (MDEoA) et n-heptyldiéthanolamine (C₇DEoA).

9. Composition selon l'une quelconque des revendications précédentes, dans laquelle le ratio molaire base (B)/amine (2), et en particulier le ratio molaire amine (1)/amine (2), est compris entre 1:99 et 99:1, dé préférence entre 1:9 et 9:1.

10. Composition selon l'une quelconque des revendications précédentes, sous forme concentrée ou diluées à l'eau ou dans un solvant organique hydrosoluble ou encore dans un solvant hydro-organique, en toutes proportions.

11. Utilisation, comme additif neutralisant et biostatique, d'une composition selon l'une quelconque des revendications 1 à 10, pour fluide aqueux industriel.

12. Utilisation selon la revendication 11, dans laquelle le fluide aqueux industriel est une base blanche de peinture aqueuse ou hydro-organique, un concentré pigmentaire aqueux, une dispersion aqueuse de charges minérales, un fluide lubrifiant pour coupes de métaux, et autres.

13. Fluide aqueux industriel qui est une base blanche de peinture aqueuse ou hydro-organique, un concentré pigmentaire aqueux, une dispersion aqueuse de charges minérales, un fluide lubrifiant pour coupes de métaux, comprenant au moins une composition neutralisante et biostatique selon l'une quelconque des revendications 1 à 10.

14. Fluide selon la revendication 13, comprenant entre 0,0001 et 10% en poids, de préférence entre 0,001% et 5% en poids, d'au moins une composition neutralisante et biostatique selon l'une quelconque des revendications 1 à 9.

## Patentansprüche

1. Biostatische Neutralisierungszusammensetzung für wässrige Fluide, umfassend mindestens eine organische oder mineralische Base (B) und mindestens ein Amin der Formel (2): 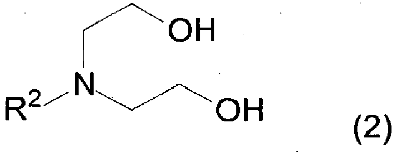 worin R² für einen linearen oder verzweigten Kohlenwasserstoffrest, vorzugsweise einen linearen oder verzweigten Alkylrest mit 7, 8, 9, 10, 11 oder 12 Kohlenstoffatomen steht.

2. Zusammensetzung nach Anspruch 1, wobei die Base (B) ausgewählt ist aus Alkalimetallhydroxiden oder Erdalkalimetallhydroxiden, Stickstoffbasen, vorzugsweise Basen, die mindestens eine Amingruppe, besonders bevorzugt 1 Amingruppe umfassen.

3. Zusammensetzung nach Anspruch 1 oder Anspruch 2, wobei die Base (B) eine organische Base ist, wobei die Base (B) ganz besonders bevorzugt ein Amin, das eine Gesamtzahl an Kohlenstoffatomen von kleiner oder gleich 10, vorzugsweise eine Gesamtzahl an Kohlenstoffatomen von kleiner oder gleich 9 umfasst, das gegebenenfalls 1 Hydroxyalkylrest oder 2 Hydroxyalkylreste oder sogar 3 Hydroxyalkylreste, bevorzugt 1 oder 2 oder sogar 3 Hydroxyethylreste, besonders bevorzugt 1 oder 2 Hydroxyethylreste, noch stärker bevorzugt 2 Hydroxyethylreste umfasst.

4. Zusammensetzung nach einem der vorhergehenden Ansprüche, umfassend mindestens ein Amin, das eine Gesamtzahl an Kohlenstoffatomen von kleiner 10, vorzugsweise von kleiner 9, umfasst, vorzugsweise mindestens ein Amin der Formel (1) und mindestens ein Amin der Formel (2): 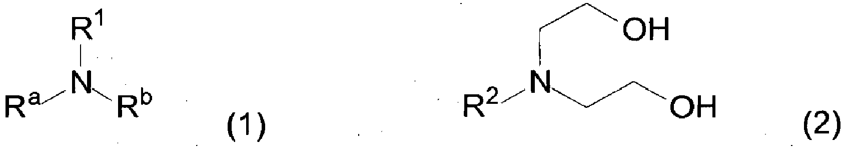 Formel (1) und Formel (2), worin:
- R¹ entweder für einen linearen oder verzweigten Kohlenwasserstoffrest, vorzugsweise einen linearen oder verzweigten Alkylrest mit 1, 2, 3, 4, 5 oder 6 Kohlenstoffatomen steht, und R^{a} und R^{b} jeweils für den Rest -(CH₂-CH₂)-OH stehen,
- oder R¹ für das Wasserstoffatom steht und R^{a} für das Wasserstoffatom steht und R^{b} für den Rest -(CH₂-CH₂)-OH steht,
- und in den beiden oben genannten Fällen R² für einen linearen oder verzweigten Kohlenwasserstoffrest, vorzugsweise einen linearen oder verzweigten Alkylrest mit 7, 8, 9, 10, 11 oder 12 Kohlenstoffatomen steht.

5. Zusammensetzung nach einem der vorhergehenden Ansprüche, wobei das Amin der Formel (1) ausgewählt ist aus Butylamin, Hexylamin, (2-Ethyl)hexylamin, Monoethanolamin (MEA), Methyldiethanolamin (MDEoA), Ethyldiethanolamin (EDEoA), Propyldiethanolamin (PrDEoA), Butyldiethanolamin (BDEoA), Pentyldiethanolamin (PDEoA) und Hexyldiethanolamin (HDEoA), vorzugsweise aus Monoethanolamin (MEA) und Methyldiethanolamin (MDEoA).

6. Zusammensetzung nach einem der vorhergehenden Ansprüche, wobei das Amin der Formel (2) ausgewählt ist aus n-Heptyldiethanolamin (C₇DEoA), n-Octyldiethanolamin (C₈DEoA), 2-(Ethyl) hexyldiethanolamin (C₂₋₆DEoA), n-Decyldiethanolamin (C₁₀DEoA), n-Undecyldiethanolamin (C₁₁DEoA) und n-Dodecyldiethanolamin (C₁₂DEoA), bevorzugt ist das Amin der Formel (2) n-Heptyldiethanolamin (C₇DEoA).

7. Zusammensetzung nach einem der vorhergehenden Ansprüche, umfassend mindestens ein erstes Amin, ausgewählt aus Monoethanolamin (MEA), (2-Ethyl)hexylamin und Methyldiethanolamin (MDEoA), und mindestens ein zweites Amin, das n-Heptyldiethanolamin (C₇DEoA) ist.

8. Zusammensetzung nach einem der vorhergehenden Ansprüche, umfassend Monoethanolamin (MEA) und n-Heptyldiethanolamin (C₇DEoA) oder Methyldiethanolamin (MDEoA) und n-Heptyldiethanolamin (C₇DEoA).

9. Zusammensetzung nach einem der vorhergehenden Ansprüche, wobei das Molverhältnis von Base (B) zu Amin (2) und insbesondere das Molverhältnis von Amin (1) zu Amin (2) im Bereich zwischen 1:99 und 99:1, vorzugsweise zwischen 1:9 und 9:1 liegt.

10. Zusammensetzung nach einem der vorhergehenden Ansprüche in konzentrierter Form oder in beliebigen Anteilen verdünnt in Wasser oder in einem wasserlöslichen organischen Lösungsmittel oder auch in einem wässrig-organischen Lösungsmittel.

11. Verwendung einer Zusammensetzung nach einem der Ansprüche 1 bis 10 als biostatisches Neutralisierungsadditiv für ein wässriges Industriefluid.

12. Verwendung nach Anspruch 11, wobei das wässrige Industriefluid ein wässriger oder wässrig-organischer weißer Grundanstrich, ein wässriges Pigmentkonzentrat, eine wässrige Dispersion mineralischer Füllstoffe, ein Schmierstofffluid für die Metallbearbeitung und andere ist.

13. Wässriges Industriefluid, das ein wässriger oder wässrig-organischer weißer Grundanstrich, ein wässriges Pigmentkonzentrat, eine wässrige Dispersion mineralischer Füllstoffe, ein Schmierstofffluid für die Metallbearbeitung ist, umfassend mindestens eine biostatische Neutralisierungszusammensetzung nach einem der Ansprüche 1 bis 10.

14. Fluid nach Anspruch 13, umfassend zwischen 0,0001 und 10 Gew.-%, vorzugsweise zwischen 0,001 und 5 Gew.-% mindestens einer biostatischen Neutralisierungszusammensetzung nach einen der Ansprüche 1 bis 9.

## Claims

1. Biostatic neutralizing composition for aqueous fluids comprising at least one organic or mineral base (B) and at least one amine of formula (2): 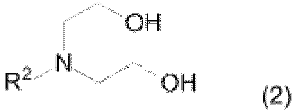 wherein R² represents a linear or branched hydrocarbon-based radical, preferably a linear or branched alkyl radical, having 7, 8, 9, 10, 11 or 12 carbon atoms.

2. Composition according to Claim 1, wherein the base (B) is chosen from alkali metal hydroxides or alkaline-earth metal hydroxides, nitrogenous bases, preferably bases comprising at least one amine group, more preferably 1 amine group.

3. Composition according to Claim 1 or Claim 2, wherein the base (B) is an organic base, quite preferably the base (B) is an amine having a total number of carbon atoms of less than or equal to 10, preferably a total number of carbon atoms of less than or equal to 9, optionally having 1 hydroxyalkyl radical or 2 hydroxyalkyl radicals, or even 3 hydroxyalkyl radicals, preferably 1 or 2, or even 3 hydroxyethyl radicals, more preferably 1 or 2 hydroxyethyl radicals, more preferably still 2 hydroxyethyl radicals.

4. Composition according to any one of the preceding claims, comprising at least one amine having a total number of carbon atoms of less than 10, preferably of less than 9, preferably at least one amine of formula (1) and at least one amine of formula (2): 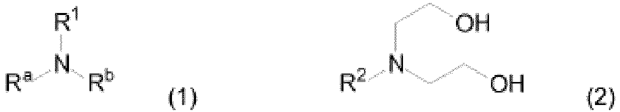 formula (1) and formula (2), wherein:
• either R¹ represents a linear or branched hydrocarbon-based radical, preferably a linear or branched alkyl radical, having 1, 2, 3, 4, 5 or 6 carbon atoms, and R^{a} and R^{b} each represent the radical -(CH₂-CH₂)-OH,
• or R¹ represents a hydrogen atom and R^{a} represents a hydrogen atom and R^{b} represents the radical - (CH₂-CH₂)-OH,
• and, in both the above cases, R² represents a linear or branched hydrocarbon-based radical, preferably a linear or branched alkyl radical, having 7, 8, 9, 10, 11 or 12 carbon atoms.

5. Composition according to any one of the preceding claims, wherein the amine of formula (1) is chosen from butylamine, hexylamine, (2-ethyl)hexylamine, monoethanolamine (MEA), methyldiethanolamine (MDEoA), ethyldiethanolamine (EDEoA), propyldiethanolamine (PrDEoA), butyldiethanolamine (BDEoA), pentyldiethanolamine (PDEoA) and hexyldiethanolamine (HDEoA), preferably from monoethanolamine (MEA) and methyldiethanolamine (MDEoA).

6. Composition according to any one of the preceding claims, wherein the amine of formula (2) is chosen from n-heptyldiethanolamine (C₇DEoA), n-octyldiethanolamine (C₈DEoA), 2-(ethyl)hexyldiethanolamine (C₂₋₆DEoA), n-decyldiethanolamine (C₁₀DEoA), n-undecyldiethanolamine (C₁₁DEoA) and n-dodecyldiethanolamine (C₁₂DEoA), preferably the amine of formula (2) is n-heptyldiethanolamine (C₇DEoA).

7. Composition according to any one of the preceding claims, comprising at least one first amine chosen from monoethanolamine (MEA), (2-ethyl)hexylamine and methyldiethanolamine (MDEoA) and at least one second amine which is n-heptyldiethanolamine (C₇DEoA).

8. Composition according to any one of the preceding claims, comprising monoethanolamine (MEA) and n-heptyldiethanolamine (C₇DEoA) or methyldiethanolamine (MDEoA) and n-heptyldiethanolamine (C₇DEoA).

9. Composition according to any one of the preceding claims, wherein the base (B)/amine (2) molar ratio, and in particular the amine (1)/amine (2) molar ratio, is between 1:99 and 99:1, preferably between 1:9 and 9:1.

10. Composition according to any one of the preceding claims, in concentrated form or diluted in water or in a water-soluble organic solvent or else in an aqueous-organic solvent, in any proportions.

11. Use, as a biostatic neutralizing additive, of a composition according to any one of Claims 1 to 10, for an industrial aqueous fluid.

12. Use according to Claim 11, wherein the industrial aqueous fluid is an aqueous or aqueous-organic white paint base, an aqueous pigment concentrate, an aqueous dispersion of mineral fillers, a metal working fluid, and others.

13. Industrial aqueous fluid which is an aqueous or aqueous-organic white paint base, an aqueous pigment concentrate, an aqueous dispersion of mineral fillers, a metal working fluid, comprising at least one biostatic neutralizing composition according to any one of Claims 1 to 10.

14. Fluid according to Claim 13, comprising between 0.0001 and 10% by weight, preferably between 0.001% and 5% by weight, of at least one biostatic neutralizing composition according to any one of Claims 1 to 9.
